# EUROPÄISCHE PATENTSCHRIFT

(11) **EP 3 190 068 B1**
(45) Veröffentlichungstag und Bekanntmachung des Hinweises auf die Patenterteilung: **05.12.2018**
(21) Anmeldenummer: 16150386.7
(22) Anmeldetag: 07.01.2016
(51) Int. Cl.: B65G 29/00, B65G 47/86

(54) **TRÄGERPLATTE MIT INTEGRIERTEN BEFESTIGUNGSSOCKELN FÜR GREIFEINRICHTUNGEN**
SUPPORT PLATE WITH INTEGRATED FIXING SOCKETS FOR GRIPPING DEVICES
PLAQUE DE SUPPORT COMPRENANT DES SOCLES DE FIXATION INTEGRES POUR DES MOYENS DE PREHENSION

(43) Veröffentlichungstag der Anmeldung: 12.07.2017
(73) Patentinhaber: Tyrolon-Schulnig GmbH, 6395 Hochfilzen (AT)
(72) Erfinder: Schulnig, Elmar, 6391 Fieberbrunn (AT)
(74) Vertreter: Rupprecht, Kay

(56) Entgegenhaltungen:
- EP-A1- 0 726 216
- WO-A1-2015/000680
- CN-A- 101 466 631
- CN-A- 102 774 643
- DE-A1-102008 055 616
- DE-A1-102011 010 954
- DE-B3-102014 107 538

## Beschreibung

Die vorliegende Erfindung betrifft eine Tragevorrichtung, insbesondere eine Trägerplatte, für eine Transportvorrichtung, die Tragevorrichtung zum Befestigen und Tragen von Greifeinrichtungen zum Greifen, Halten und/oder Führen von Behältern, sowie eine Transportvorrichtung mit der zuvor genannten Tragevorrichtung.

Transportvorrichtung zum Greifen, Halten und/oder Führen von Behältern sind bereits aus dem Stand der Technik bekannt, insbesondere unter dem Namen "Klammerstern", und werden bei der fließbandtechnischen Bearbeitung von Behältern verwendet.

Unter dem Begriff "Behälter" sind im Zusammenhang mit der vorliegenden Erfindung insbesondere, aber nicht ausschließlich Behälter mit einem im Wesentlichen kreisförmigen Querschnitt zu verstehen, z. B. Flaschen oder Dosen oder Gläser, die jeweils den Gepflogenheiten entsprechend aus Glas, Metall oder Kunststoff bestehen können. Unter dem Begriff "im Wesentlichen rund geformt" sind im Zusammenhang mit der vorliegenden Erfindung nicht ausschließlich im geometrischen Sinne rund geformte Behälter zu verstehen, sondern beispielsweise auch ovale, regelmäßig vieleckige, usw., welche dann insbesondere einen im Wesentlichen kreisförmigen, beispielsweise aber auch ovalen oder vieleckigen Querschnitt aufweisen.

Die Transportvorrichtungen werden unter anderem in einem Prozessablauf zum Reinigen und Befüllen von Behältern verwendet, in denen die Transportvorrichtungen örtlich positioniert und justiert werden müssen, um die Behälter von Förderbändern aufzunehmen und diese zur nächsten Arbeitsstation wie z.B. einer Abfüll-, Reinigungs- oder Etikettieranlage zu transportieren. Hierzu weisen die Transportvorrichtung Greifeinrichtungen zum Greifen, Halten und/oder Führen von insbesondere flaschenartigen Behältern auf. Eine solche Greifeinrichtung für ein Behältertransportsystem besitzt wenigstens ein Greifarmpaar aus zwei Greifarmen und kann zwischen einer Greifstellung und einer Öffnungsstellung wechseln. Um einen Behälter zu transportieren, greifen die Greifarme normalerweise unterhalb des Halskragens oder - bei Flaschen - um den Bauch des Behälters. Eine Steuerwelle, insbesondere ein Steuernocken, fungiert hierfür als Öffnungsmittel und eine Spiralfeder als Schließmittel der Greifeinrichtung. Schlussendlich wird der Steuernocken einer Greifeinrichtung über ein Betätigungsmittel angesteuert, mit dessen Hilfe die Greifeinrichtung geöffnet und geschlossen werden kann.

Die Greifeinrichtungen werden normalerweise konzentrisch auf einer kreisrunden Trägerplatte um die Antriebsachse bzw. Antriebswelle der Transportvorrichtung positioniert und befestigt. Dadurch wird sichergestellt, dass nach einer bestimmten Rotationsbewegung der Trägerplatte die gleiche oder eine andere Greifvorrichtung wieder an eine selbe oder eine vorbestimmte Position gelangt, an der die Greifeinrichtung einen zu transportierenden Behälter stabil greift oder wieder freigibt. Unter anderem abhängig von der Größe der Trägerplatte, insbesondere deren Radius, kann eine maximale Anzahl von Greifeinrichtungen auf der Trägerplatte befestigt werden. Ebenfalls ist die Anzahl der Greifeinrichtungen auf der Trägerplatte sowohl von der Größe der Greifeinrichtungen selbst als auch von der Größe der zu transportierenden Behälter abhängig.

Um die Transportvorrichtungen auf neue Betriebsumstände, wie z.B. neue Anlagen oder Behälter mit einer unterschiedlichen Form und/oder Größe, anzupassen, muss unter anderem die Anzahl oder die Art der Greifeinrichtungen geändert bzw. ausgetauscht werden. Aus dem Stand der Technik ist bekannt, dass die Greifeinrichtungen einen Grundsockel mit drei Vertiefungen aufweisen, in denen zwei Schwenkachsen für beide Greifarme sowie ein drehbar gelagerter Steuernocken angeordnet sind, wobei der Grundsockel auf einer Trägerplatte montierbar bzw. montiert ist. Dadurch hat man den Vorteil, eine kompakte Einheit der Greifeinrichtung zur Hand zu haben, die bei einem Austausch der Greifeinrichtung in einem Stück von bzw. auf der Trägerplatte entfernt und/oder positioniert und befestigt werden kann. Allerdings entsteht hierdurch auch der Nachteil, dass, falls kaum Modifikationen an der Transportvorrichtung hinsichtlich der Greifeinrichtungen notwendig sind, zusätzliche Bauelemente und somit zusätzliches Gewicht getragen werden müssen. Des Weiteren ist normalerweise auch die Grundplatte bzw. Trägerplatte aus Metall ausgebildet, weshalb wiederum ein schweres Gewicht auf der Antriebswelle der Transportvorrichtung lastet.

Eine derartige, aus dem Stand der Technik bekannte Transportvorrichtung, wird in der Druckschrift DE 102014107538 offenbart. EP 0 726 216 A1 offenbart eine Tragevorrichtung nach dem Oberbegriff des Anspruchs 1.

Es ist daher die Aufgabe der vorliegenden Erfindung, eine Tragevorrichtung für eine Transportvorrichtung der eingangs genannten Art in vorteilhafter Weise weiterzubilden, insbesondere dahingehend, dass sowohl eine Gewichtsersparnis als auch eine Ersparnis an der Anzahl der notwendigen Bauelemente für die Transportvorrichtung ermöglicht werden. Ebenso soll der zeitliche und finanzielle Aufwand bei der Herstellung und der Montage der Transportvorrichtung, insbesondere der Tragevorrichtung, reduziert werden.

Die zuvor genannten Aufgaben werden erfindungsgemäß durch eine Tragevorrichtung mit den Merkmalen des Anspruchs 1 gelöst. Danach ist vorgesehen, dass eine Tragevorrichtung zum Aufnehmen, Befestigen und Tragen mindestens einer Greifeinrichtung mit mindestens einem Greifarmpaar aus einem ersten und einem zweiten Greifarm zum Greifen, Halten und Führen von insbesondere flaschenartigen Behältern, wobei die Vorrichtung an einer Antriebswelle einer Transportvorrichtung befestigbar ist, bereitgestellt wird, wobei die Vorrichtung mindestens eine erste, zweite und dritte Aufnahme für jede Greifeinrichtung zum Aufnehmen und Befestigen einer ersten Greifarmschwenkachse des ersten Greifarms, einer zweiten Greifarmschwenkachse des zweiten Greifarms und einer zwischen dem ersten und zweiten Greifarm angeordneten Steuerwelle zum Öffnen oder Schließen der Greifeinrichtung aufweist.

Dies bringt den Vorteil mit sich, dass kein gesonderter Grundsockel für eine Greifeinrichtung mehr notwendig ist, die die Schwenkachsen und die Steuerwelle aufnehmen, positionieren und befestigen. Die in der Tragevorrichtung ausgebildeten Aufnahmen sind derart ausgebildet, die zuvor genannten Funktionen des Grundsockels auszuüben. Auf Grund der geringeren Anzahl von Bauelementen der Transportvorrichtung, insbesondere des Fehlens des Grundsockels, sind auch weniger Herstellungs- bzw. Montageschritte notwendig, in denen der Grundsockel hergestellt, mit den genannten Achsen und Wellen ausgestattet und auf eine Trägerplatte installiert werden muss. Stattdessen werden die genannten Achsen und Wellen direkt in die Tragevorrichtung eingesetzt und befestigt.

In einer vorteilhaften Ausführungsform ist die Tragevorrichtung einstückig oder mehrstückig aus Kunststoff ausgebildet. Durch die Verwendung von Kunststoff, insbesondere von Thermoplasten und Duroplasten, ergibt sich der Vorteil, dass das Gewicht der Tragevorrichtung gegenüber Tragevorrichtungen aus Metall oder Stahl wesentlich reduziert wird. Die einstückige Ausführungsform der Tragevorrichtung (aus Kunststoff) hat den Vorteil, dass die Tragevorrichtung ohne Weiteres auf die Antriebswelle gesetzt bzw. ausgetauscht werden kann. Die mehrstückige Ausführungsform der Tragevorrichtung (aus Kunststoff) ist insbesondere bei groß dimensionierten Tragevorrichtungen von Vorteil, oder auch bei Antriebswellen, die aufgrund zusätzlicher Aggregate oberhalb der Transportvorrichtung eine Montage aus einem Stück nicht zulassen. Hierbei können die kleineren Teilstücke der Tragevorrichtung leichter hergestellt, verpackt und transportiert werden. Die Teilstücke sind mit Verbindungsmittel miteinander verbindbar. Die Verbindungsmittel bestehen aus Befestigungsmitteln, wie z.B. Schrauben und Muttern, und/oder aus in den Teilstücken integrierten Stecksystemen, wie z.B. Stecker und Aufnahme. Durch die integrierten Stecksysteme können die Teilstücke ohne weitere Hilfsmittel oder Werkzeuge miteinander verbunden werden. Besonders vorteilhaft sind Teilstücke, die einen Kreissektor bzw. Kreisausschnitt der scheiben- bzw. kreisförmigen Tragevorrichtung insbesondere mit einem Winkel von 90, 45 oder 30 Grad bilden.

Erfindungsgemäß weist die Tragevorrichtung einen Trägerring, in dem die mindestens drei Aufnahmen ausgebildet sind, und eine mit dem Trägerring verbundene Verbindungsscheibe zum Verbinden der Tragevorrichtung mit der Antriebswelle auf, wobei der Trägerring und die Verbindungsscheibe (13) einstückig ausgebildet sind. Dies hat den Vorteil, dass die Positionierung der Greifeinrichtungen auf dem Trägerring klar erkennbar ist. Die Verbindungsscheibe zeigt eindeutig, wie die Tragevorrichtung, insbesondere der Trägerring, mit der Antriebswelle verbunden und positioniert wird.

Es hat sich ebenfalls als vorteilhaft herausgestellt, dass die Dicke des Trägerrings größer als die Dicke der Verbindungsscheibe ist. Dadurch ergibt sich der Vorteil, dass zum einen Gewicht gespart wird und zum anderen die Dicke des Trägerrings groß genug ist, um die Greifarmschwenkachsen und die Steuerwelle stabil zu positionieren und zu befestigen.

Des Weiteren wurde in einer vorteilhaften Ausführungsform die Tragevorrichtung derart ausgebildet, dass zum Befestigen die erste und die zweite Greifarmschwenkachse in die erste und zweite Aufnahme kalt pressbar sind. Aufgrund dessen ist eine einfache Montierung der genannten Schwenkachsen in der Tragevorrichtung entweder mit einer Presse oder einem ähnlichen Presswerkzeug/- anlage oder ohne zusätzliche Hilfsmittel oder Werkzeuge möglich.

Vorzugsweise ist die Tragevorrichtung durch eine Vertiefung und ein darin einsetzbares Verstärkungselement gekennzeichnet. Die Vertiefung ist um und zwischen der ersten und zweiten Aufnahme ausgebildet. Dabei ist die Tiefe der Vertiefung derart beschaffen, dass das eingesetzte Verstärkungselement bündig mit der Oberfläche der Tragevorrichtung abschließt. Das Verstärkungselement, insbesondere aus Metall, ist einstückig und weist zwei Bohrungen auf, die den gleichen Durchmesser wie die Greifarmschwenkachsen oder die erste und zweite Aufnahme haben. Das Verstärkungselement dient dem Aufnehmen der ersten und zweiten Greifarmschwenkachse und dem Einhalten eines Abstands zwischen den beiden Greifarmschwenkachsen. Dies hat den Vorteil, dass insbesondere bei einer Kunststoffausführung der Tragevorrichtung und deren zu Metall vergleichsweise geringe Steifigkeit der Abstand der Schwenkachsen zueinander eingehalten wird. Beim Öffnungs- und Schließvorgang der Greifeinrichtung wirken Kräfte, die den Kunststoff bei einer Beanspruchung über eine längere Zeit verformen können. Dadurch kann die stabile Befestigung der Greifarmschwenkachse in der Tragevorrichtung durch die Aufnahme verloren gehen. Das Verstärkungselement verhindert ein Verformen der Aufnahme, in dem es anstelle der Aufnahme die zuvor genannten Kräfte zum großen Teil aufnimmt.

Ebenso hat es sich, wie bei den Schwenkachsen, als vorteilhaft herausgestellt, dass zum Befestigen die Steuerwelle mit einer Lagerung, insbesondere einem Wälzlager oder Gleitlager, in die dritte Aufnahme kalt pressbar ist. Hieraus ergeben sich die gleichen zuvor genannten Vorteile, wie die für die Greifarmschwenkachsen.

Zusätzlich können in der Tragevorrichtung, insbesondere der Verbindungsscheibe, Aussparungen ausgebildet sein, die zur Antriebswelle (punkt-)symmetrisch angeordnet sind. Dadurch kann zusätzliches Gewicht gespart werden. Ebenso hat die symmetrische Anordnung der Aussparungen den Vorteil, dass eine dynamische Unwucht vermieden wird. Die Aussparungen können auch als Verdrehsicherungsmittel dienen, wenn Befestigungsmittel von z.B. der Antriebswelle in die Aussparungen eingesetzt werden.

Zur Lösung der zuvor genannten Aufgabe wird erfindungsgemäß auch eine Transportvorrichtung mit den Merkmalen des Anspruchs 4 bereitgestellt. Darin ist vorgesehen, dass eine Transportvorrichtung eine erfindungsgemäße Tragevorrichtung, mindestens eine Greifeinrichtung zum Greifen, Halten und Führen von insbesondere flaschenartigen Behältern und eine Antriebswelle zum Drehen der Tragevorrichtung aufweist.

Weitere Einzelheiten und Vorteile der Erfindung sollen nun anhand einiger in den Zeichnungen dargestellter bevorzugter Ausführungsbeispielen näher erläutert werden.

Es zeigen:
- Fig. 1: eine perspektivische Ansicht der erfindungsgemäßen Tragevorrichtung mit darauf montierten Greifeinrichtungen;
- Fig. 2: eine Draufsicht auf die erfindungsgemäße Tragevorrichtung aus Fig. 1; und
- Fig. 3: einen Querschnitt entlang des Radius der erfindungsgemäßen Tragevorrichtung aus Fig. 1.

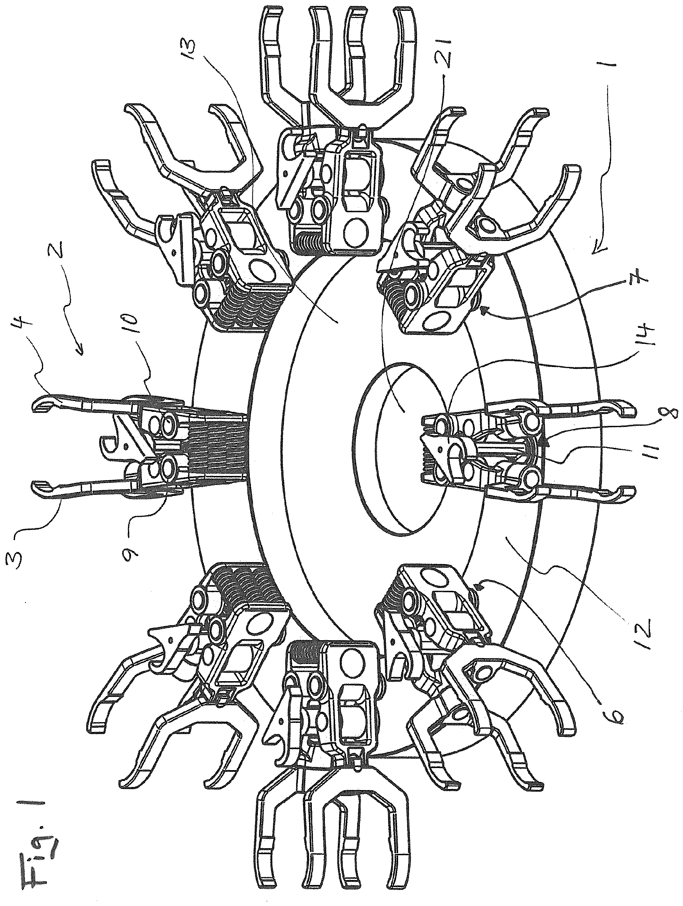

Fig. 1 zeigt eine Tragevorrichtung 1 als bevorzugtes Ausführungsbeispiel aus einem Trägerring 12 und einer Verbindungsscheibe 13, die kreisförmig und scheibenförmig ausgebildet ist. Die Tragevorrichtung 1 weist des Weiteren eine mittig angeordnete Bohrung 21 auf, in der die Antriebswelle einer Transportvorrichtung anordbar bzw. einsetzbar ist. Der Rand der Tragevorrichtung 1, d.h. der Trägerring 12, ist dicker als der kreisförmige Bereich um die Bohrung 21, der Verbindungsscheibe 13. Auf dem Trägerring ist eine Vielzahl von Greifeinrichtungen 2 konzentrisch zur Bohrung 21 angeordnet. Die Greifeinrichtungen 2 haben zu den benachbarten Greifeinrichtungen immer den gleichen Abstand; in diesem Fall sind die Greifeinrichtungen von der Bohrung 21 aus betrachtet im 45 Grad Winkel zueinander versetzt. Die Greifeinrichtung 2 weist einen ersten Greifarm 3 und einen zweiten Greifarm 4 auf. Der erste Greifarm ist auf einer ersten Greifarmschwenkachse 9 angeordnet und der zweite Greifarm 4 ist auf einer zweiten Greifarmschwenkachse 10 angeordnet. Zwischen dem ersten und dem zweiten Greifarm 3 und 4 ist eine Steuerwelle 11 mit einem Steuernocken angeordnet, die in dem Trägerring 12 der Tragevorrichtung 1 befestigt und drehbar gelagert ist. Auf der Steuerwelle 11 ist ein Betätigungselement 14 ausgebildet, das mit einem entsprechenden Aktivierungselement (nicht dargestellt) angesteuert bzw. gedreht werden kann. Dadurch wird die Steuerwelle 11 mit dem Steuernocken gedreht und die Greifeinrichtung 2 entweder geöffnet (Öffnungsstellung) oder geschlossen (Greifstellung).

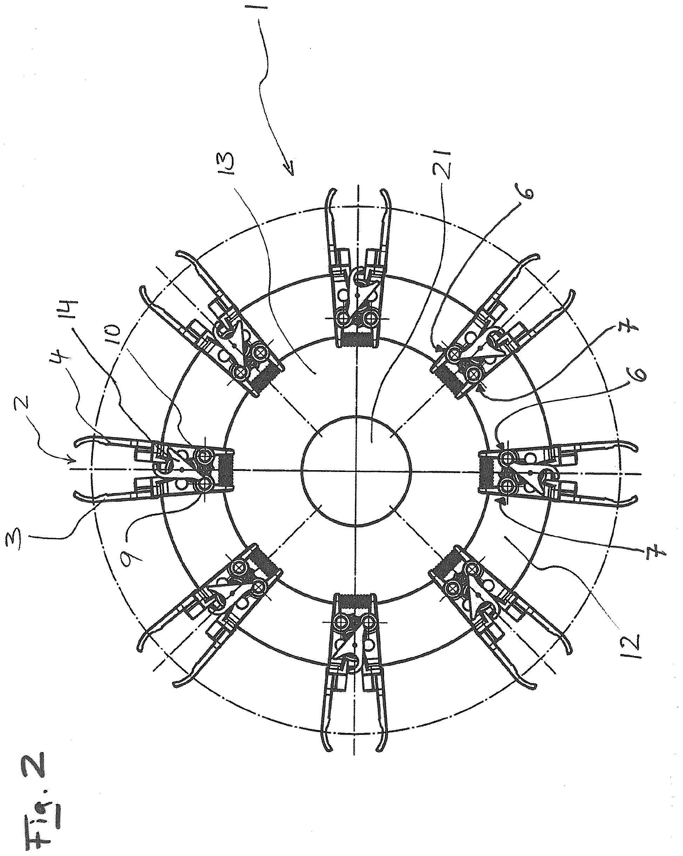

Fig. 2 zeigt die Tragevorrichtung aus Fig. 1 in der Draufsicht als bevorzugtes Ausführungsbeispiel. Durch die homogene bzw. gleichmäßige Anordnung der Greifeinrichtungen 2 wird eine dynamische Unwucht beim Rotieren der Tragevorrichtung vermieden. In Figur 2 ist auf Grund der montierten Greifeinrichtungen 2 nicht direkt erkennbar, dass für jede Greifeinrichtung 2 drei Aufnahmen zur Verfügung stehen, in die die beiden Greifarmschwenkachsen 9 und 10 und die Steuerwelle 11 eingesetzt und befestigt sind.

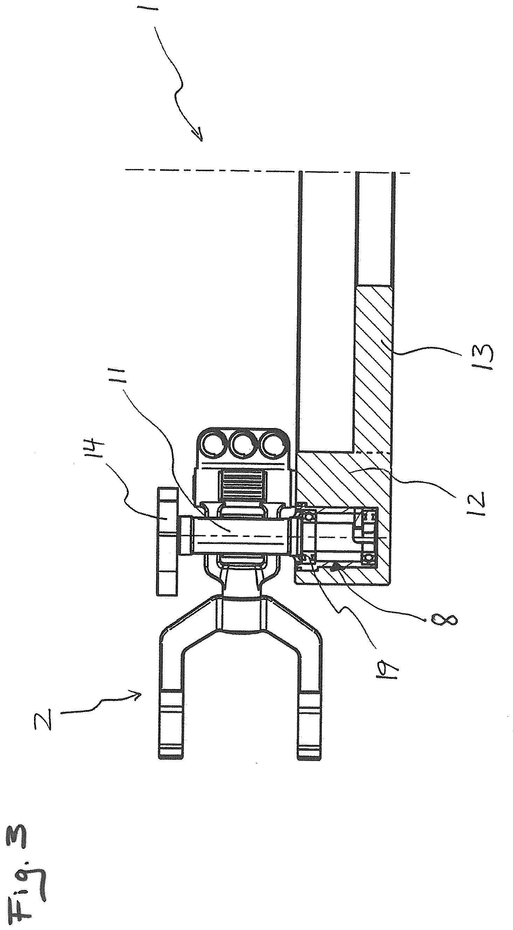

Fig. 3 zeigt einen Querschnitt entlang des Radius der Trägervorrichtung 1 aus Fig. 1 als bevorzugtes Ausführungsbeispiel. Hierbei ist insbesondere die Anordnung der Steuerwelle 11 mit einer Lagerung, insbesondere einem Wälzlager 19, in dem Trägerring 12 zu erkennen. Die Dicke des Trägerrings 12 ist mehr als doppelt so groß wie die Dicke der Verbindungsscheibe 13.

### Bezugszeichen

- 1: Tragevorrichtung (Kunststoffgrundplatte)
- 2: Greifeinrichtung
- 3: Erster Greifarm (der Greifeinrichtung)
- 4: Zweiter Greifarm (der Greifeinrichtung)
- 6: Erste Aufnahme (der Tragevorrichtung)
- 7: Zweite Aufnahme (der Tragevorrichtung)
- 8: Dritte Aufnahme (der Tragevorrichtung)
- 9: Erste Greifarmschwenkachse (des ersten Greifarms)
- 10: Zweite Greifarmschwenkachse (des zweiten Greifarms)
- 11: Steuerwelle mit Steuernocken
- 12: Trägerring (der Tragevorrichtung)
- 13: Verbindungsscheibe (der Tragevorrichtung)
- 14: Betätigungselement
- 15: Vertiefung
- 16: Verstärkungselement (Verstärkungsplatte aus Metall)
- 17: Erste Bohrung (des Verstärkungselements)
- 18: Zweite Bohrung (der Verstärkungselements)
- 19: Lagerung/Wälzlager (der Schaltachse)
- 20: Transportvorrichtung
- 21: Bohrung (der Tragevorrichtung)

## Patentansprüche

1. Tragevorrichtung (1) zum Aufnehmen, Befestigen und Tragen mindestens einer Greifeinrichtung (2) mit mindestens einem Greifarmpaar aus einem ersten und einem zweiten Greifarm (3, 4) zum Greifen, Halten und Führen von Behältern, wobei die Tragevorrichtung (1) an einer Antriebswelle einer Transportvorrichtung befestigbar ist, und wobei die Tragevorrichtung einen Trägerring (12) aufweist, in dem eine erste Aufnahme (6) zum Aufnehmen und Befestigen einer ersten Greifarmschwenkachse (9) des ersten Greifarms (3), eine zweite Aufnahme (7) zum Aufnehmen und Befestigen einer zweiten Greifarmschwenkachse (10) des zweiten Greifarms (4) und eine dritte Aufnahme (8) zum Aufnehmen und Befestigen einer zwischen dem ersten und zweiten Greifarm (3, 4) angeordneten Steuerwelle (11) zum Öffnen oder Schließen der Greifeinrichtung (2) ausgebildet sind, **gekennzeichnet durch**
eine mit dem Trägerring (12) verbundene Verbindungsscheibe (13) zum Verbinden der Tragevorrichtung (1) mit der Antriebswelle, wobei der Trägerring (12) und die Verbindungsscheibe (13) einstückig ausgebildet sind.

2. Tragevorrichtung (1) nach Anspruch 1,
**dadurch gekennzeichnet, dass**
die Tragevorrichtung (1) einstückig oder mehrstückig aus Kunststoff ausgebildet ist.

3. Tragevorrichtung (1) nach Anspruch 1 oder 2,
**dadurch gekennzeichnet, dass**
die Dicke des Trägerrings (12) größer als die Dicke der Verbindungsscheibe (13) ist.

4. Transportvorrichtung (20), mit einer Tragevorrichtung (1) nach einem der Ansprüche 1 bis 3, mit mindestens einer Greifeinrichtung (2) zum Greifen, Halten und Führen von Behältern, und mit einer Antriebswelle zum Drehen der Tragevorrichtung (1).

## Claims

1. A support device (1) for receiving, securing and supporting at least one gripping device (2) having at least one gripping arm pair of a first and a second gripping arm (3, 4) for gripping, holding and guiding containers, wherein the support device (1) can be fixed to a drive shaft of a transport device, and wherein the transport device comprises a support ring (12) in which is formed a first receiver (6) for receiving and securing a first gripper arm pivot axis (9) of the first gripper arm (3), a second receiver (7) for receiving and securing a second gripper arm pivot axis (10) of the second gripper arm (4), and a third receiver (8) for receiving and securing a control shaft (11) disposed between the first and second gripper arm (3, 4) for opening or closing the gripping device (2) **characterized by**
a connection plate (13) connected to the support ring (12) for connecting the support device (1) to the drive shaft,
wherein the support ring (12) and the connection plate (13) are integrally formed.

2. The support device (1) according to claim 1,
**characterized in that**
the support device (1) is of single-part or multi-part structure made from plastic.

3. The support device (1) according to claim 1 or 2,
**characterized in that**
the thickness of the support ring (12) is greater than the thickness of the connecting plate (13).

4. A transport device (20) comprising a support device (1) according to one of claims 1 to 3 having at least one gripping device (2) for gripping, holding and guiding containers and a drive shaft for rotating the support device (1).

## Revendications

1. Dispositif de support (1) pour recevoir, fixer et porter au moins un moyen de préhension (2) comportant au moins une paire de bras de préhension constituée d'un premier et d'un second bras de préhension (3, 4) pour saisir, retenir et guider des récipients, le dispositif de support (1) pouvant être fixé à un arbre d'entraînement d'un dispositif de transport, le dispositif de support comprenant un anneau porteur (12) dans lequel sont réalisés un premier logement (6) pour recevoir et fixer un premier axe de basculement (9) du premier bras de préhension (3), un second logement (7) pour recevoir et fixer un second axe de basculement (10) du second bras de préhension (4) et un troisième logement (8) pour recevoir et fixer un arbre de commande (11) agencé entre le premier et le second bras de préhension (3, 4) et destiné à ouvrir ou à fermer le moyen de préhension (2),
**caractérisé par**
un disque de liaison (13) relié à l'anneau porteur (12) et destiné à relier le dispositif de support (1) à l'arbre d'entraînement, l'anneau porteur (12) et le disque de liaison (13) étant réalisés en une seule pièce.

2. Dispositif de support (1) selon la revendication 1,
**caractérisé en ce que**
le dispositif de support (1) est réalisé en matière synthétique en une seule pièce ou en plusieurs pièces.

3. Dispositif de support (1) selon la revendication 1 ou 2,
**caractérisé en ce que**
l'épaisseur de l'anneau porteur (12) est supérieure à l'épaisseur du disque de liaison (13).

4. Dispositif de transport (20) comportant un dispositif de support (1) selon l'une des revendications 1 à 3, comportant au moins un moyen de préhension (2) pour saisir, retenir et guider des récipients, et comportant un arbre d'entraînement pour tourner le dispositif de support (1).
